# EUROPÄISCHE PATENTSCHRIFT

(11) **EP 1 418 380 B1**
(45) Veröffentlichungstag und Bekanntmachung des Hinweises auf die Patenterteilung: **10.12.2008**
(21) Anmeldenummer: 03022762.3
(22) Anmeldetag: 10.10.2003
(51) Int. Cl.: F16P 3/14, G08B 13/194

(54) **Verfahren und Vorrichtung zur Überwachung eines Erfassungsbereiches**
Method and device for monitoring an area
Procédé et dispositif pour surveiller une zone

(30) Priorität: 06.11.2002 DE 10251584
(43) Veröffentlichungstag der Anmeldung: 12.05.2004
(73) Patentinhaber: Leuze lumiflex GmbH + Co. KG, 82256 Fürstenfeldbruck (DE)
(72) Erfinder: Lohmann, Lutz, Dr., 82140 Olching (DE)
(74) Vertreter: Ruckh, Rainer Gerhard

(56) Entgegenhaltungen:
- EP-A- 0 179 252
- EP-A- 1 168 269
- WO-A-02/073086
- DE-A- 4 113 992
- DE-A- 19 603 935
- DE-A- 19 619 688
- DE-A- 19 938 639

## Beschreibung

Die Erfindung betrifft eine Vorrichtung zur Überwachung eines Erfassungsbereiches an einem Arbeitsmittel.

Das Arbeitsmittel kann beispielsweise von einem Montageroboter gebildet sein, welcher zum Montieren von Werkstücken dient. Derartige Montageroboter stellen ein hohes Gefahrenpotential für die jeweilige Bedienperson dar, da diese die Werkstücke üblicherweise manuell am Montageroboter einführen muss.

Zur Absicherung derartiger Erfassungsbereiche werden üblicherweise Schutzeinrichtungen eingesetzt, die bei einem unkontrollierten Eingriff der Bedienperson in einen derartigen Erfassungsbereich das Arbeitsmittel außer Betrieb setzen.

Derartige Schutzeinrichtungen können insbesondere als Zweihandschaltungen ausgebildet sein. Diese Zweihandschaltungen schützen die Hände der Bedienperson dadurch, dass zum Auslösen und Aufrechterhalten einer gefahrbringenden Bewegung zwei Hebel aktiv betätigt werden müssen. Dadurch muss die Bedienperson beide Hände an den Hebeln halten und ist so bei der Bedienung eines Arbeitsmittels vor Verletzungen geschützt. Nachteilig hierbei ist jedoch, dass weitere Personen im Erfassungsbereich ungeschützt sind.

Für den Fall, dass das Arbeitsmittel als Montageroboter ausgebildet ist, ist zudem nachteilig, dass sich der Arbeitstakt des Montageroboters verringert, wodurch dessen Verfügbarkeit unnötig eingeschränkt wird.

Weiterhin werden als Schutzeinrichtungen Sicherheits-Lichtvorhänge und/oder Laserscanner eingesetzt. Ein derartiger Sicherheits-Lichtvorhang ist beispielsweise aus der DE 39 39 191 C3 bekannt. Diese Sicherheits-Lichtvorhänge bestehen aus mehreren Paaren von Sendern und Empfängern, welche jeweils eine Lichtschranke bilden. Laserscanner dienen in der Regel als Hintertretschutz hinter einer Lichtschranke oder einem Lichtgitter.

Mit derartigen Sicherheitseinrichtungen wird ein ebener, zweidimensionaler Überwachungsbereich abgedeckt.

Nachteilig bei derartigen Sicherheitseinrichtungen ist, dass zu einer kompletten Absicherung des Erfassungsbereiches an einem Montageroboter, insbesondere hinsichtlich des Zugriffsschutzes und der Bereichssicherung eine Vielzahl von Sicherheitseinrichtungen benötigt wird. Dies stellt nicht nur einen unerwünscht hohen Kostenaufwand dar, sondern erfordert auch eine aufwendige Montage, wobei oftmals nur unzureichend Platz für deren Anbringung zur Verfügung steht.

Die EP 0 902 402 A2 betrifft ein Verfahren zur optischen Überwachung eines Raumbereiches, insbesondere des Türbereiches eines Aufzuges. Der Raumbereich wird mittels einer Kamera überwacht. Alternativ können mehrere Kameras vorgesehen sein, mittels derer jeweils unterschiedliche Segmente des Raumbereiches überwacht werden. Die oder jede Kamera ist als digitale Kamera ausgebildet und weist ein Kameramodul, einen A/D Wandler, eine Auswerteeinheit, einen Mikroprozessor und einen Bildspeicher auf. Zur Überwachung des Raumbereiches erfolgt in der Auswerteeinheit ein pixelweiser Vergleich von Grauwerten eines aktuellen Bildes mit Grauwerten eines Referenzbildes. Dabei werden die Differenzen zwischen den Grauwerten des aktuellen Bildes und den Grauwerten des Referenzbildes gebildet. Zudem überwacht der Mikroprozessor die Funktionsfähigkeit der Kamera dadurch, dass das Unter- und/oder Überschreiten einer Grundhelligkeit des aktuellen Bildes festgestellt wird.

Aus der DE 101 20 773 A1 ist eine Anordnung mit einer Videokamera und einer Einrichtung bekannt, die zur Vermeidung von Unfällen eingesetzt werden. Die Videokamera dient zur Überwachung eines Raumbereiches. Alternativ können mehrere Videokameras vorgesehen sein, mittels derer jeweils unterschiedliche Raumbereiche überwacht werden. An die oder jede Kamera ist das Bildverarbeitungssystem angeschlossen. Hinter dem Bildverarbeitungssystem befindet sich ein Analog-Digital Wandler, dessen Ausgang mit zwei Bildverarbeitungskanälen verbunden ist. Beide Kanäle sind mit einem Datenvergleicher verbunden.

Aus der WO 02/073086 A1 ist ein optisches Überwachungssystem mit einer Kamera zur Überwachung eines Erfassungsbereichs bekannt. Die Überwachung erfolgt derart, dass bei einem objektfreien Erfassungsbereich nur dessen Randzonen mit der Kamera überwacht werden. Ist jedoch ein Objekt in den Erfassungsbereich eingedrungen, wird zu dessen Verfolgung der genannte Erfassungsbereich mit der Kamera überwacht. Die Objekterfassung kann dabei durch einen Referenzbildvergleich erfolgen.

Der Erfindung liegt die Aufgabe zugrunde, ein System zu schaffen, welches eine sichere Überwachung eines Erfassungsbereiches an einem Arbeitsmittel gewährleistet ohne dessen Verfügbarkeit unnötig einzuschränken.

Zur Lösung dieser Aufgabe sind die Merkmale der Ansprüche 1 und 7 vorgesehen. Vorteilhafte Ausführungsformen und zweckmäßige Weiterbildungen der Erfindung sind in den Unteransprüchen beschrieben.

Bei dem erfindungsgemäßen Verfahren erfolgt die Überwachung eines Erfassungsbereichs an einem Arbeitsmittel mit wenigstens einer Kamera. In einem ersten Verfahrensschritt erfolgt das Erfassen einer objektfreien Schutzzone innerhalb des Erfassungsbereichs mittels der Kamera als Referenzhintergrund. Anschließend erfolgt eine Überprüfung des Referenzhintergrundes hinsichtlich dessen Inhomogenität. Dabei wird der Referenzhintergrund nur dann als ungültig verworfen, wenn innerhalb einer vorgegebenen Varianzstrecke die ermittelte Inhomogenität ein vorgegebenes Maß unterschreitet. Ansonsten wird der Referenzhintergrund als gültig klassifiziert. Darauf erfolgt eine Freigabe zur Erfassung von in die Schutzzone eindringenden sicherheitskritischen Objekten bei als gültig klassifiziertem Referenzhintergrund, wobei diese durch Vergleich von mit der Kamera aktuell ermittelten Bildern der Schutzzone mit dem gültigen Referenzhintergrund erfolgt. Ein sicherheitskritisches Objekt gilt dann als erkannt, wenn das jeweilige aktuelle Bild signifikant vom Referenzhintergrund abweicht.

Durch die Referenzierung der aktuellen Bildinformationen auf den Referenzhintergrund wird die Nachweissicherheit bei der Detektion von sicherheitskritischen Objekten erheblich erhöht.

Wesentlich hierbei ist, dass der Referenzhintergrund hinsichtlich seiner Inhomogenität überprüft wird und nur dann als gültig klassifiziert wird, wenn dieser keine homogenen Zonen aufweist, deren Abmessungen größer als die vorgegebene Varianzstrecke sind. Dabei entspricht die Varianzstrecke vorzugsweise der Hälfte der minimalen zu erfassenden Objektgröße und damit der Auflösung der Kamera bzw. des Kamerasystems.

Durch diese Überprüfung des Referenzhindergrundes ist gewährleistet, dass die Objekterfassung zur Detektion sicherheitskritischer Objekte nur bei Vorliegen eines durchgängig inhomogenen Referenzhindergrundes freigegeben wird. Damit können homogene sicherheitskritische Objekte, insbesondere einfarbige Gegenstände, vor dem inhomogenen Referenzhintergrund sicher erfasst werden, da sich die Objekte als homogene Bildbereiche von dem inhomogenen Referenzhintergrund signifikant abheben. Gleichermaßen können auch inhomogene Objekte durch den Vergleich der aktuellen Bilder der Kamera mit dem als gültig klassifizierten Referenzhintergrund sicher erfasst werden, da die Wahrscheinlichkeit, dass die Inhomogenitätsstruktur des Objekts identisch mit der Struktur des Referenzhintergrundes ist, vernachlässigbar klein ist.

Zur Klassifizierung des Referenzhintergrundes wird bei der Auswertung des Bildes der objektfreien Schutzzone bevorzugt ein Raster von flächigen Zonen definiert, wobei in jeder der vorzugsweise identischen Zonen eine vorgegebene Anzahl der Empfangselemente der Kamera zusammengefasst wird. Innerhalb jeder Zone, deren Abmessungen an die Größe der Varianzstrecke angepasst sind, wird ein Referenzbildmerkmal abgeleitet. Je nach Ausbildung der Kamera kann das Referenzbildmerkmal als Mittelwert der Grauwerte oder Farbwerte der einzelnen Empfangselemente einer Zone definiert sein. Die Varianzstrecke ist dann vorzugsweise als Abstand zweier benachbarter Zonen definiert, wobei ein gültiger Referenzhintergrund nur dann vorliegt, wenn innerhalb der Zonenraster keine benachbarten Zonen mit dem selben Wert des Referenzbildmerkmals registriert werden.

Die Überprüfung, ob ein gültiger Referenzhintergrund vorliegt, erfolgt im Rahmen eines Teach-in-Vorganges. Bei diesem Teach-in-Vorgang ist gewährleistet, dass sich kein Objekt im Erfassungsbereich, insbesondere in der Schutzzone befindet. Die Klassifikation des Referenzhintergrundes wird vorzugsweise mittels eines Meldeausgangs angezeigt, so dass eine Bedienperson überprüfen kann, ob ein gültiger Referenzhintergrund eingelernt wurde oder nicht. Liegt kein gültiger Referenzhintergrund vor, kann der Teach-in-Vorgang wiederholt werden. Erst wenn ein gültiger Referenzhintergrund eingelernt wurde, erfolgt die Freigabe der Vorrichtung zur Objekterfassung.

Die erfindungsgemäße Vorrichtung, siehe Anspruch 7, weist eine Kamera auf, an welche eine Rechnereinheit angeschlossen ist. In der Rechnereinheit erfolgt die Auswertung der Ausgangssignale der Kamera, wobei in Abhängigkeit hiervon ein Schaltausgang angesteuert wird, mittels dessen das Arbeitsmittel in Betrieb gesetzt werden kann. Zudem wird mit der Rechnereinheit vorteilhaft der Meldeausgang angesteuert. Über den Schaltausgang wird das Arbeitsmittel nur dann in Betrieb gesetzt, wenn ein gültiger Referenzhintergrund eingelernt wurde und darauf die Objekterfassung freigegeben wurde, und wenn bei dieser Objekterfassung kein sicherheitskritisches Objekt in der Schutzzone erkannt wird.

In einer vorteilhaften Ausführungsform weist die erfindungsgemäße Vorrichtung ein redundantes Kamerasystem bestehend aus zwei Kameras sowie einem diesen vorgeordneten Strahlteiler auf. Über den Strahlteiler werden Bilder des Erfassungsbereichs auf beide Kameras abgebildet. Die Vorrichtung weist weiterhin zwei Rechnereinheiten auf, wobei jeweils eine Rechnereinheit an eine der Kameras zur Auswertung der dort erfassten Bildinformation angeschlossen ist. Beide Rechnereinheiten sind zur gegenseitigen Überprüfung miteinander gekoppelt. Der Schaltausgang und gegebenenfalls der Meldeausgang werden in diesem Fall von beiden Rechnereinheiten angesteuert.

Die beiden Kameras bilden ein redundantes Kamerasystem, durch welches eine hohe Detektionssicherheit bei der Objekterfassung erzielt wird. Die hohe Detektionssicherheit wird weiterhin durch die den Kameras nachgeordnete zweikanalige Rechnerstruktur gewährleistet.

Dabei erfolgt die erfindungsgemäße Bildverarbeitung derart, dass durch den Strahlteiler jeweils dasselbe Bild von dem Erfassungsbereich auf die Kameras abgebildet wird. Die Bildinformationen, die von einer Kamera während des Teach-in-Vorgangs zur Überprüfung des Referenzhintergrundes und während der anschließenden Objekterfassung generiert werden, werden jeweils in der dieser Kamera nachgeordneten Rechnereinheit ausgewertet. Zudem erfolgt ein Vergleich der Auswerteergebnisse beider Rechnereinheiten, wobei dieser Vergleich vorzugsweise auf einer Bildmerkmalsebene erfolgt. Dabei wird die Objekterfassung im Anschluss an den Teach-in-Vorgang nur dann freigegeben, wenn der Referenzhintergrund in beiden Rechnereinheiten als gültig klassifiziert wurde. Während der anschließenden Objekterfassung erfolgt in beiden Rechnereinheiten ein Vergleich des aktuell ermittelten Bildes mit dem in der jeweiligen Rechnereinheit abgespeicherten Referenzhintergrundes.

Die erfindungsgemäße Vorrichtung bildet vorzugsweise ein System mit diversitärer Redundanz. Die vorzugsweise identisch oder wenigstens funktionsgleich ausgebildeten Kameras sowie die nachgeordneten Rechnereinheiten bilden ein redundantes Optik- und Hardwaresystem, während die Software auf den Rechnereinheiten diversitär ausgebildet ist. Dies bedeutet, dass auf den Rechnereinheiten unterschiedliche Softwarestrukturen vorhanden sind, die durch Installation unterschiedlicher Softwaremodule oder durch unterschiedliche Programmabläufe auf den Rechnereinheiten realisierbar sind.

Mit der erfindungsgemäßen Vorrichtung wird somit eine hohe Sicherheit bei der Auswertung der Bilderfassung erzielt, so dass die Vorrichtung den sicherheitstechnischen Anforderungen zum Einsatz im Bereich des Personenschutzes genügt.

Mit der erfindungsgemäßen Vorrichtung kann durch eine geeignete Wahl des vom Kamerasystem erfassten Erfassungsbereiches sowohl ein Zugriffsschutz als auch eine Bereichssicherung im Bereich des Arbeitsmittels realisiert werden. Das Arbeitsmittel ist vorteilhaft von einem Arbeitsroboter, insbesondere einem Montageroboter gebildet. Generell kann das Arbeitsmittel von einer Druckmaschine, einer Zuführeinrichtung, einer Presse, insbesondere einer Abkantpresse oder dergleichen gebildet sein.

Ein weiterer Vorteil der Erfindung besteht darin, dass innerhalb des von dem Kamerasystem erfassten Erfassungsbereiches sicherheitskritische Objekte, wie zum Beispiel Hände oder Finger einer Person, von nicht sicherheitskritischen Objekten unterschieden werden können. Diese Unterscheidung erfolgt zweckmäßigerweise durch die in den Rechnereinheiten durchgeführte Bildmerkmalsanalyse.

Die Erfindung wird im Nachstehenden anhand der Zeichnungen erläutert. Es zeigen:
- Figur 1:: Ein als Montageroboter ausgebildetes Arbeitsmittel mit einer Vorrichtung zur Überwachung eines Erfassungsbereiches im Zugangsbereich zum Montageroboter.
- Figur 2:: Blockschaltbild der erfindungsgemäßen Vorrichtung gemäß Figur 1.
- Figur 3:: Ein als Druckmaschine ausgebildetes Arbeitsmittel mit einer Vorrichtung zur Überwachung eines sich über den Bereich des Anlegers und Auslegers der Druckmaschine erstreckenden Erfassungsbereiches.
- Figur 4:: Druckmaschine gemäß Figur 3 mit zwei Vorrichtungen zur Überwachung des Bereiches des Auslegers und des Anlegers.
- Figur 5:: Von einer Vorrichtung überwachter Bereich des Papiereinzugs am Anleger der Druckmaschine gemäß Figur 3 oder 4.
- Figur 6:: Seitenansicht eines von einer Abkantpresse gebildeten Arbeitsmittels mit einer vor diesem angeordneten Vorrichtung zur Überwachung eines Erfassungsbereiches.
- Figur 7:: Querschnitt durch einen Ausschnitt der Anordnung gemäß Figur 1 mit jeweils einer innerhalb eines Erfassungsbereiches liegenden Schutzzone und Warnzone.

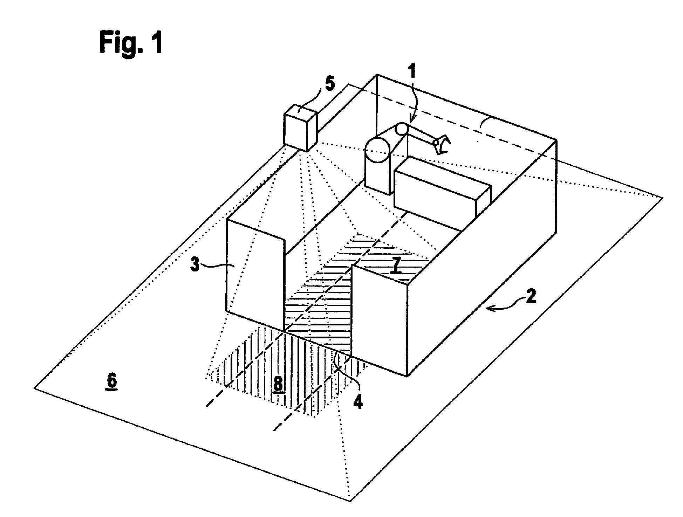

Figur 1 zeigt ein Ausführungsbeispiel einer Schutzeinrichtung, die zur Überwachung des Vorfelds eines als Arbeitsroboter ausgebildeten Arbeitsmittels dient. Im vorliegenden Ausführungsbeispiel ist der Arbeitsroboter von einem Montageroboter 1 gebildet.

Der Montageroboter 1 befindet sich in einer eingezäunten Fertigungszelle 2 mit einer Einzäunung 3, die eine Zugangsöffnung 4 aufweist. Über die Zugangsöffnung 4 werden Gegenstände in die Fertigungszelle 2 eingebracht und aus dieser abtransportiert. Zudem hat das Bedienpersonal über diese Zugangsöffnung 4 Zugang zu der Fertigungszelle 2. Die Schutzeinrichtung ist von der erfindungsgemäßen Vorrichtung 5 gebildet, mittels derer ein Erfassungsbereich 6 erfasst wird. Der Erfassungsbereich 6 ist im vorliegenden Fall von dem Bereich der Fertigungszelle 2 sowie dessen Vorfeld gebildet.

Die Vorrichtung 5 ist in einem Gehäuse integriert, welches formschlüssig auf einer nicht dargestellten mechanischen Halterung so aufsitzt, dass diese schräg oberhalb des Montageroboters 1 angeordnet ist. Zur Ausrichtung der Vorrichtung 5 ist die mechanische Halterung in allen drei Raumrichtungen justierbar.

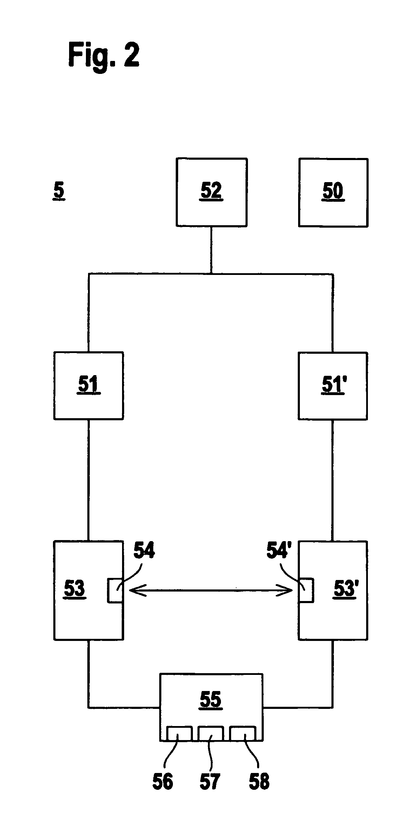

Figur 2 zeigt schematisch den Aufbau der erfindungsgemäßen Vorrichtung 5. Die Vorrichtung 5 weist ein Beleuchtungssystem 50 zur Ausleuchtung des zu überwachenden Erfassungsbereiches 6 auf. Weiterhin weist die Vorrichtung 5 ein redundantes Kamerasystem auf. Das Kamerasystem weist zwei Kameras 51, 51' auf, welchen ein Strahlteiler 52 vorgeordnet ist. Die Kameras 51, 51' sind im vorliegenden Fall identisch ausgebildet und sind beispielsweise von CMOSoder CCD-Kameras gebildet. In jedem Fall weist jede Kamera 51, 51' eine matrixförmige Anordnung von Empfangselementen auf. Prinzipiell sind auch unterschiedliche Kameras 51, 51' einsetzbar, die jedoch wenigstens funktionsgleich hinsichtlich ihrer optischen Parameter wie der Auflösung und der Größe der lichtempfindlichen Fläche sind. Der Strahlteiler 52 ist von einem Strahlteiler-Objektiv oder dergleichen gebildet. Mittels des Strahlteilers 52 wird jeweils dasselbe Bild vom Erfassungsbereich 6 auf die lichtempfindlichen Flächen der Kameras 51, 51' abgebildet.

An jede Kamera 51 oder 51' ist jeweils eine Rechnereinheit 53 oder 53' angeschlossen. Die beiden Rechnereinheiten 53, 53' bilden eine zweikanalige Auswerteeinheit zur Auswertung der in den Kameras 51, 51 generierten Bildinformationen. Die Rechnereinheiten 53, 53' sind zudem miteinander gekoppelt, wobei hierfür jede Rechnereinheit 53, 53' eine entsprechende Schnittstelle 54, 54' aufweist. Über die Schnittstellen 54, 54' erfolgt ein bidirektionaler Datenaustausch zwischen den Rechnereinheiten 53, 53'.

Die Ausgänge der Rechnereinheiten 53, 53' sind auf eine Ausgangsschaltung 55 geführt. Im vorliegenden Fall weist die Ausgangsschaltung 55 einen Schaltausgang 56, einen Warnausgang 57 und einen Meldeausgang 58 auf. Der Schaltausgang 56 und vorzugsweise auch der Warnausgang 57 sowie der Meldeausgang 58 sind als selbstüberwachende Sicherheitsausgänge ausgebildet.

Die erfindungsgemäße Vorrichtung 5 bildet ein System mit diversitärer Redundanz. Die Kameras 51, 51' sowie die Hardwarestrukturen der Rechnereinheiten 53, 53' sind redundant ausgebildet. Die Software der Rechnereinheiten 53, 53' ist diversitär ausgebildet. Dies wird dadurch erreicht, dass die Softwarestrukturen der Rechnereinheiten 53, 53' unterschiedlich ausgebildet sind. Dies kann einerseits dadurch erreicht werden, dass auf den Rechnereinheiten 53, 53' unterschiedliche Softwaremodule installiert sind. Andererseits kann die diversitäre Softwarestruktur durch unterschiedliche Programmabläufe in den Rechnereinheiten 53, 53' erreicht werden.

Die Bildinformationen der Kameras 51, 51' werden in die jeweils angeschlossene Rechnereinheit 53 oder 53' eingelesen. Dort werden die analogen Bildinformationen zunächst digitalisiert und dann ausgewertet.

Je nach dem ob die Kameras 51, 51' von Grauwert-Kameras oder Farbkameras gebildet sind, erfolgt die Auswertung in Form einer Grauwertanalyse oder einer Farbmerkmalsanalyse.

Mittels der Vorrichtung 5 wird abgeprüft, ob sich ein sicherheitskritisches Objekt in einer Schutzzone 7 innerhalb des Erfassungsbereiches 6 befindet. Ist dies der Fall, so wird über die Vorrichtung 5 zum Schutz der Bedienperson das Arbeitsmittel außer Betrieb gesetzt. Befindet sich dagegen kein sicherheitskritisches Objekt in der Schutzzone 7, so wird der Betrieb des Arbeitsmittels über die Vorrichtung 5 freigegeben.

Die Ansteuerung des Arbeitsmittels erfolgt mittels eines binären Schaltsignals, welches über den Schaltausgang 56 an das Arbeitsmittel ausgegeben wird. Der Schaltausgang 56 kann alternativ über ein Sicherheits-Bussystem an das Arbeitsmittel angeschlossen sein.

Die Schutzzone 7, innerhalb derer die Erfassung sicherheitskritischer Objekte erfolgt, ist im einfachsten Fall deckungsgleich mit dem von der Vorrichtung 5 überwachten Erfassungsbereich 6. Zweckmäßigerweise ist die Schutzzone 7 auf die Bereiche innerhalb des Erfassungsbereiches 6 begrenzt, innerhalb derer eine Gefährdung für die Bedienpersonen zu befürchten ist. Bei dem in Figur 1 dargestellten Fall stellt die Schutzzone 7 einen dreidimensionalen Teilbereich des Erfassungsbereiches 6 dar, der innerhalb der Einzäunung 3 liegt. Somit wird mit der Schutzzone 7 unmittelbar der gefahrbringende Schwenkbereich des Montageroboters 1 erfasst.

Zusätzlich zur Schutzzone 7 ist bei dem in Figur 1 dargestellten Ausführungsbeispiel eine Warnzone 8 vorgesehen. Die Warnzone 8 liegt im Vorfeld der Schutzzone 7 und grenzt unmittelbar an die Außenseite der Einzäunung 3 im Bereich der Zugangsöffnung 4 an.

Der Warnzone 8 ist in der Vorrichtung 5 der Warnausgang 57 zugeordnet, welcher einen nicht dargestellten Warnmelder steuert. In der Vorrichtung 5 wird erfasst, ob sich ein sicherheitskritisches Objekt in der Warnzone 8 befindet oder nicht. In Abhängigkeit davon wird ein binäres Signal generiert, wobei der jeweilige Schaltzustand des Signals über den Warnausgang 57 ausgegeben wird. Wird ein sicherheitskritisches Objekt in der Warnzone 8 registriert, so wird über den dadurch generierten Schaltzustand der Warnmelder aktiviert, so dass dieser ein akustisches und/oder optisches Warnsignal abgibt.

Die Objekterfassung innerhalb der Schutzzone 7 und vorteilhaft auch innerhalb der Warnzone 8 erfolgt durch einen Referenzbildvergleich.

Hierzu wird vor Beginn der Betriebsphase der Vorrichtung 5 ein Teach-in Vorgang durchgeführt, um einen Referenzhintergrund einzulernen. Dabei wird mittels des Kamerasystems der Vorrichtung 5 die objektfreie Schutzzone 7 und die objektfreie Warnzone 8 erfasst. Die entsprechenden Bildinformationen werden als Referenzhintergrund abgespeichert. Im vorliegenden Fall weist die Vorrichtung 5 einen zweikanaligen Aufbau auf, so dass der Referenzhintergrund in beiden Rechnereinheiten 53, 53' abgespeichert wird.

Anschließend erfolgt in jeder Rechnereinheit 53, 53' eine Klassifizierung des Referenzhintergrundes als gültig oder ungültig, wobei hierzu der Referenzhintergrund hinsichtlich seiner Inhomogenität überprüft wird. Dabei wird ein Referenzhintergrund nur dann als gültig klassifiziert, wenn dieser keine homogenen Bereiche aufweist deren Abmessungen größer oder gleich einer Varianzstrecke sind.

Zur Überprüfung des Referenzhintergrundes werden in jeder Rechnereinheit 53, 53' die matrixförmigen Empfangselemente der zugeordneten Kamera 51, 51' in flächige Zonen eingeteilt, deren Größen vorzugsweise identisch und an die Größe der Varianzstrecke angepasst sind.

Zur Auswertung der Bildinformationen des den Referenzhintergrund bildenden Bildes der objektfreien Schutz- 7 und Warnzone 8 wird in jeder der Zonen aus den Ausgangssignalen der Empfangselemente dieser Zone ein Referenzbildmerkmal zur Beurteilung der Inhomogenitätsstruktur des Referenzhintergrundes abgeleitet.

Je nach Ausbildung der Kamera 51, 51' wird als Referenzbildmerkmal im vorliegenden Fall der Mittelwert der die Ausgangssignale der Empfangselemente einer Zone bildenden Grauwerte oder Farbwerte gebildet. Anschließend werden die so gewonnenen Mittelwerte von benachbarten Zonen miteinander verglichen. Ein ungültiger Referenzhintergrund liegt dann vor, wenn in wenigstens einer Rechnereinheit 53, 53' innerhalb des gesamten Referenzhintergrundes wenigstens für zwei benachbarte Zonen innerhalb vorgegebener Toleranzgrenzen derselbe Mittelwert erhalten wird. Demgegenüber liegt ein gültiger Referenzhintergrund nur dann vor, wenn bei der Überprüfung des Referenzhintergrundes in beiden Rechnereinheiten 53, 53' übereinstimmend als Ergebnis erhalten wird, dass keine benachbarten Zonen mit dem selben Referenzbildmerkmal innerhalb des Referenzhintergrundes vorliegen. Bei dieser Überprüfung ist somit die Varianzstrecke durch den Abstand zweier benachbarter Zonen definiert.

In den beiden Rechnereinheiten 53, 53' wird ein binäres Steuersignal generiert, dessen beide Schaltzustände angeben, ob ein gültiger oder ungültiger Referenzhintergrund vorliegt. Das Steuersignal wird dabei auf den Meldeausgang 58 ausgegeben, mittels dessen die Schaltzustände des Steuersignals visualisiert werden.

In Abhängigkeit des Schaltzustandes des Steuersignals wird die Objekterfassung zur Detektion von Objekten in der Schutzzone 7 und der Warnzone 8 freigegeben oder gesperrt.

Liegt ein ungültiger Referenzhintergrund vor, wird die Objekterfassung nicht freigegeben, d. h. mit der Vorrichtung 5 kann die Schutzzone 7 nicht überwacht werden. Dementsprechend wird auch der Betrieb des Arbeitsmittels über den Schaltausgang 56 gesperrt.

Eine Bedienperson erkennt anhand der Signalabgabe am Meldeausgang 58, dass ein ungültiger Referenzhintergrund eingelernt wurde und die Vorrichtung 5 daher gesperrt ist. Die Bedienperson kann darauf den Teach-in-Vorgang wiederholen bis ein gültiger Referenzhintergrund eingelernt wurde.

Sobald ein gültiger Referenzhintergrund eingelernt wurde, wird über das Steuersignal die Objekterfassung in der Vorrichtung 5 freigegeben.

Die Erfassung von Objekten innerhalb der Schutzzone 7 und der Warnzone 8 erfolgt durch einen Vergleich der aktuell mit dem Kamerasystem ermittelten Bilder und den in dem Rechnereinheiten 53, 53' abgespeicherten gültigen Referenzhintergrund.

Dabei werden aus den aktuellen Bildinformationen Bildmerkmale gewonnen, anhand derer ein Objekt erfassbar und klassifizierbar ist.

Vorzugsweise werden hierbei die Empfangselemente der jeweiligen Kamera 51, 51' in dieselben Zonen eingeteilt, die auch zur Klassifizierung des Referenzhintergrundes eingesetzt wurden. Innerhalb jeder Zone wird ein Bildmerkmal ermittelt. Im einfachsten Fall werden hierzu wiederum die Mittelwerte der als Grauwerte oder Farbwerte ausgebildeten Ausgangssignale der Empfangselemente einer Zone gebildet.

Zur Objekterfassung werden die Bildmerkmale der aktuellen Bilder der Kamera 51, 51' mit dem Referenzbildmerkmal des abgespeicherten Referenzhintergrundes verglichen. Ein Objekt gilt in einer Rechnereinheit 53,53' als erkannt, wenn wenigstens ein Bildmerkmal nicht mit dem zugeordneten Referenzbildmerkmal übereinstimmt.

Durch die Bewertung der Bildmerkmale erfolgt insbesondere eine Unterscheidung von sicherheitskritischen und nicht sicherheitskritischen Objekten. Zu den sicherheitskritischen Objekten zählen die Bedienpersonen, vorzugsweise die Arme einer Bedienperson. Nicht sicherheitskritische Objekte bilden beispielsweise statische Objekte im Umfeld des Montageroboters 1, insbesondere auch die von diesem zu bearbeitende Teile.

Die in den einzelnen Rechnereinheiten 53, 53' ermittelten Ergebnisse der Bildauswertung werden miteinander verglichen, wobei der Vergleich vorzugsweise auf der Ebene der einzelnen Bildmerkmale erfolgt.

Ein sicherheitskritisches Objekt gilt dabei als erkannt, wenn in beiden Rechnereinheiten 53, 53' übereinstimmend die einem sicherheitskritischen Objekt entsprechenden Bildmerkmale erfasst werden. Wird ein sicherheitskritisches Objekt innerhalb der Schutzzone 7 erfasst, so führt dies zum Abschalten des Arbeitsmittels.

Führt der Vergleich der Bildmerkmale, die in den Rechnereinheiten 53, 53' ermittelt werden, nicht zu einem übereinstimmenden Ergebnis wird aus Sicherheitsgründen das Arbeitsmittel ebenfalls außer Betrieb gesetzt, da in diesem Fall nicht auszuschließen ist, dass sich ein sicherheitskritisches Objekt in der Schutzzone 7 befindet.

Wird ein sicherheitskritisches Objekt in der Warnzone 8 registriert, so wird dies über den Warnmelder signalisiert.

Dadurch wird einer Bedienperson angezeigt, dass sich ein sicherheitskritisches Objekt in unmittelbarer Nähe zur Schutzzone 7 befindet. Insbesondere wird der Bedienperson signalisiert, dass deren Arme in der Nähe der Schutzzone 7 sind, so dass die Bedienperson die drohende Gefahr einer Verletzung durch Entfernen ihrer Hände aus der Warnzone 8 beseitigen kann, ohne dass ein Eingriff in die Schutzzone 7 erfolgt, der zu einem unerwünschten Abschalten des Montageroboters 1 führen würde.

In einer vorteilhaften Weiterbildung der Erfindung wird die Bewegungsrichtung eines sicherheitskritischen Objektes innerhalb der Warnzone 8 erfasst.

Eine Aktivierung des Warnmelders 60 erfolgt in diesem Fall zweckmäßigerweise nur dann, wenn sich ein sicherheitskritisches Objekt innerhalb der Warnzone 8 auf die Schutzzone 7 zu bewegt.

Prinzipiell kann ein von der Vorrichtung 5 erfasster Erfassungsbereich 6 jeweils in mehrere Schutzzonen 7 und Warnzonen 8 unterteilt sein. Zweckmäßigerweise umfasst der Referenzhintergrund in diesem Fall sämtliche Schutzzonen 7 und Warnzonen 8, so dass in diesem Objekte wiederum durch einen Referenzbildvergleich erfassbar sind. Jeweils einer Schutzzone 7 ist vorzugsweise ein separater Schaltausgang 56 und jeder Warnzone 8 ein separater Warnausgang 57 zugeordnet.

Eine Außerbetriebsetzung des Arbeitsmittels über die Vorrichtung 5 erfolgt dann, wenn in wenigstens einer Schutzzone 7 wenigstens ein sicherheitskritisches Objekt registriert wird.

Je nach Anwendungsfall kann für jede Warnzone 8 ein separater Warnmelder vorgesehen sein. Alternativ kann ein Warnmelder mehreren Warnausgängen zugeordnet sein.

Die Schaltzustände der Schaltausgänge 56 und der Warnausgänge 57 können dabei in geeigneter Weise visualisiert sein, wobei hierfür geeignete Anzeigemittel vorgesehen sind.

Bei dem Ausführungsbeispiel gemäß Figur 1 kann beispielsweise die Visualisierung nach Art einer Verkehrsampel erfolgen. Zeigt eine derartige Ampel rotes Licht an, so befindet sich ein sicherheitskritisches Objekt in der Schutzzone 7.

Eine gelbe Signalanzeige entspricht einem sicherheitskritischen Objekt in der Warnzone 8 bei freier Schutzzone 7. Eine grüne Signalanzeige zeigt an, dass sich weder in der Schutzzone 7 noch in der Warnzone 8 ein sicherheitskritisches Objekt befindet.

Die Dimensionierung der Schutzzone 7 und/oder Warnzone 8 kann beispielsweise durch eine Eingabe von Parametern in die Vorrichtung 5 erfolgen.

Beispielsweise kann die Vorrichtung 5 zur Inbetriebnahme und Konfigurierung der Schutzeinrichtung an einen Rechner, beispielsweise einen PC, angeschlossen werden. Die Eingabe der Parameter der Schutzzonen 7 und/oder Warnzonen 8 kann dann graphisch mit der Maus des PCs auf dem jeweiligen Aufnahmebild erfolgen.

Alternativ können die Schutzzonen 7 und/oder Warnzonen 8 durch einen Einlemvorgang vor der Inbetriebnahme der Vorrichtung 5 dimensioniert werden.

Des Weiteren können bei den genannten Konfigurierungsmöglichkeiten auch Bereiche innerhalb des Erfassungsbereiches 6 definiert werden, die bei der Überwachung durch Ausblendung ausgenommen sind. Dabei können diese Bereiche insbesondere mit den Schutzzonen 7 überlappen. In der nachfolgenden Betriebsphase der Vorrichtung 5 werden diese Bereiche vorzugsweise zu vorgegebenen Zeiten aktiviert. Während dieser Zeiten erfolgt dann bei Eindringen eines sicherheitskritischen Objekts in einen derartigen Bereich weder ein Außerbetriebsetzen des Arbeitsmittels noch die Abgabe eines Warnsignals.

Die Definition derartiger Bereiche ist insbesondere dann sinnvoll, wenn beispielsweise bei einem Arbeitsmittel in vorgegebenen Zeitintervallen gefahrbringende Werkzeuge außer Betrieb gesetzt werden, so dass in deren Umgebung für diese Zeitintervalle keine Gefährdung des Bedienpersonals zu befürchten ist. Die Definition der Schutzzonen 7 und Warnzonen 8 während der Konfigurierung erfolgt zweckmäßigerweise applikationsspezifisch.

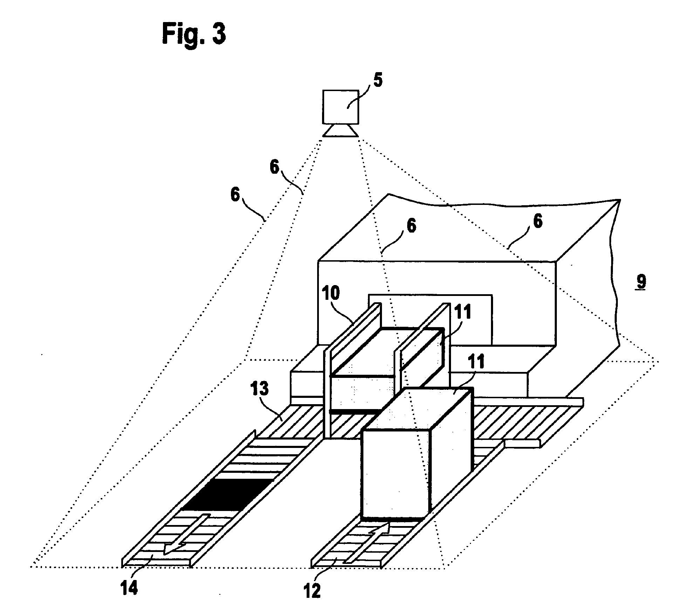

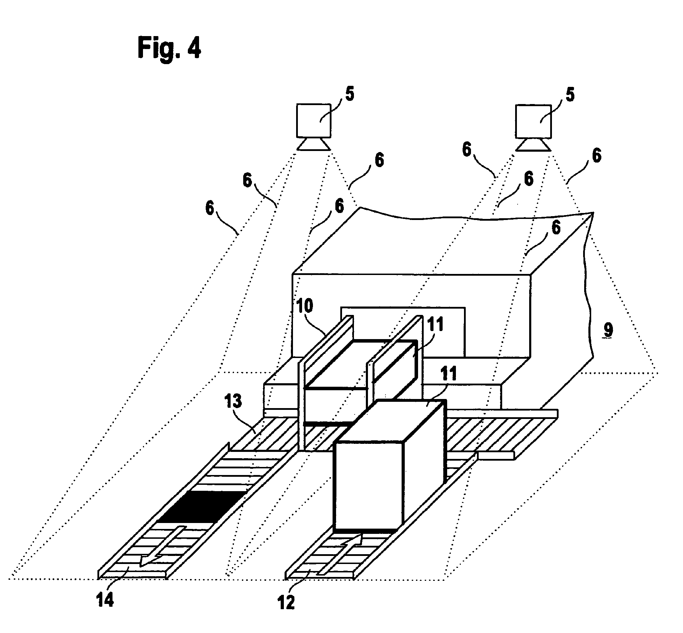

Die Figuren 3 und 4 zeigen Ausführungsbeispiele, bei welchen das von der erfindungsgemäßen Schutzeinrichtung überwachte Arbeitsmittel von einer Druckmaschine 9 gebildet ist.

Figur 3 zeigt eine Druckmaschine 9 mit einem Anleger 10 und einem Ausleger. Der Anleger 10 bildet den Einzugsbereich, in dem Papierbögen von Papierstapeln 11 abgezogen werden und in die Druckvorrichtung der Druckmaschine 9 eingezogen werden. Die einzelnen Papierstapel 11 werden dabei auf Paletten über einen ersten Kettenförderer 12 dem Anleger 10 zugeführt. Im Bereich des Anlegers 10 werden die Papierstapel 11 auf einer Rollenbahn 13 transportiert. Nach der Bedruckung der Papierbögen werden diese in Papierstapeln 11, die auf Paletten gestapelt sind, im Auslegerbereich über einen zweiten Kettenförderer 14 von der Druckmaschine 9 abtransportiert. In den Bereichen der Kettenförderer 12, 14 und des Anlegers 10 besteht durch die Fahrbewegungen der Paletten mit den Papierstapeln 11 eine Gefahr von Verletzungen für das Bedienpersonal.

Bei bekannten Druckmaschinen 9 erfolgt die Absicherung dieser Erfassungsbereiche 6 durch eine Umzäunung, die den Zugriff des Bedienpersonals komplett verhindert. Dadurch wird jedoch die Übersichtlichkeit und Zugänglichkeit der Druckmaschine 9 unnötig stark eingeschränkt. Insbesondere ist es nicht oder nur erschwert möglich, nicht sicherheitskritische Objekte im Erfassungsbereich 6 zu positionieren.

Bei dem in Figur 3 dargestellten Ausführungsbeispiel ist die Vorrichtung 5 mit dem Kamerasystem oberhalb der Druckmaschine 9 so montiert, dass der von dieser erfasste Erfassungsbereich 6 die Bereiche des Anlegers 10 und der Kettenförderer 12, 14 umfasst.

Die Durchführung der Überwachung mittels der Vorrichtung 5 erfolgt analog zu dem Ausführungsbeispiel gemäß Figur 1. Insbesondere wird der Erfassungsbereich 6 wieder in geeigneter Weise in Schutzzonen 7 und gegebenenfalls in Warnzonen 8 unterteilt, innerhalb derer sicherheitskritische Objekte erfassbar sind.

Figur 4 zeigt ein zweites Ausführungsbeispiel einer Schutzeinrichtung an einer Druckmaschine 9. Die Druckmaschine 9 entspricht dabei der Druckmaschine 9 gemäß Figur 4. Im Unterschied zur Schutzeinrichtung gemäß Figur 3 sind im vorliegenden Fall zwei Vorrichtungen 5 zur Überwachung von Erfassungsbereichen 6 vorgesehen. Der von der ersten Vorrichtung 5 erfasste Erfassungsbereich 6 umfasst den ersten Kettenförderer 12 für die Zufuhr von Papierstapeln 11 zur Druckmaschine 9.

Der von der zweiten Vorrichtung 5 erfasste Erfassungsbereich 6 umfasst den zweiten Kettenförderer 14 für den Abtransport von Papierstapeln 11 von der Druckmaschine 9.

Die von den Vorrichtungen 5 erfassten Erfassungsbereiche 6 sind dabei so dimensioniert, dass deren Breiten größer als die Breiten der Kettenförderer 12, 14 sind. Auf diese Weise können sicherheitskritische Objekte bereits erfasst werden, bevor diese in den Bereich der Kettenförderer 12, 14 eingedrungen sind. Zur Orientierung des Bedienpersonals können die Grenzen der Schutzzonen 7 innerhalb der Erfassungsbereiche 6 durch Linien auf dem Boden der Halle, in der die Druckmaschine 9 angeordnet ist, markiert sein.

Zweckmäßigerweise werden bei den Ausführungsbeispielen gemäß den Figuren 3 und 4 vor Inbetriebnahme der Schutzeinrichtung die auf den Paletten zu transportierenden Papierstapel 11 als nicht sicherheitskritische Objekte in der Auswerteeinheit 53 eingelernt und abgespeichert.

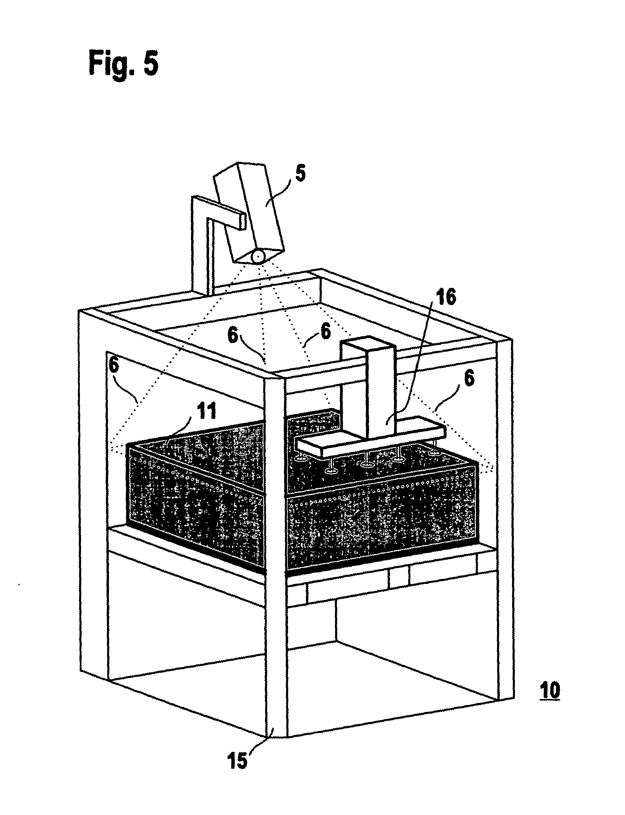

Figur 5 zeigt einen Anleger 10 einer Druckmaschine 9, welcher von einer einzelnen Vorrichtung 5 überwacht wird. Die Ausbildung der Druckmaschine 9 entspricht der Druckmaschine 9 gemäß den Figuren 3 und 4.

Der Anleger 10 besteht im Wesentlichen aus einem Rahmen 15, innerhalb dessen ein Papierstapel 11 angeordnet ist. Von der Oberseite des Papierstapels 11 wird mittels eines Greifers 16 der Papiereinzug von Papierbögen in die nicht dargestellte Druckvorrichtung der Druckmaschine 9 bewerkstelligt.

Die Vorrichtung 5 ist oberhalb des Anlegers 10 angebracht, so dass der von dem Kamerasystem der Vorrichtung 5 erfasste Erfassungsbereich 6 die Oberseite des Papierstapels 11 und den Greifer 16 umfasst. Die Schutzzone 7 innerhalb des Erfassungsbereiches 6 wird so dimensioniert, dass der Arbeitsbereich des Greifers 16, der für das Bedienpersonal gefahrbringende Bewegungen ausführt, vollständig erfasst wird.

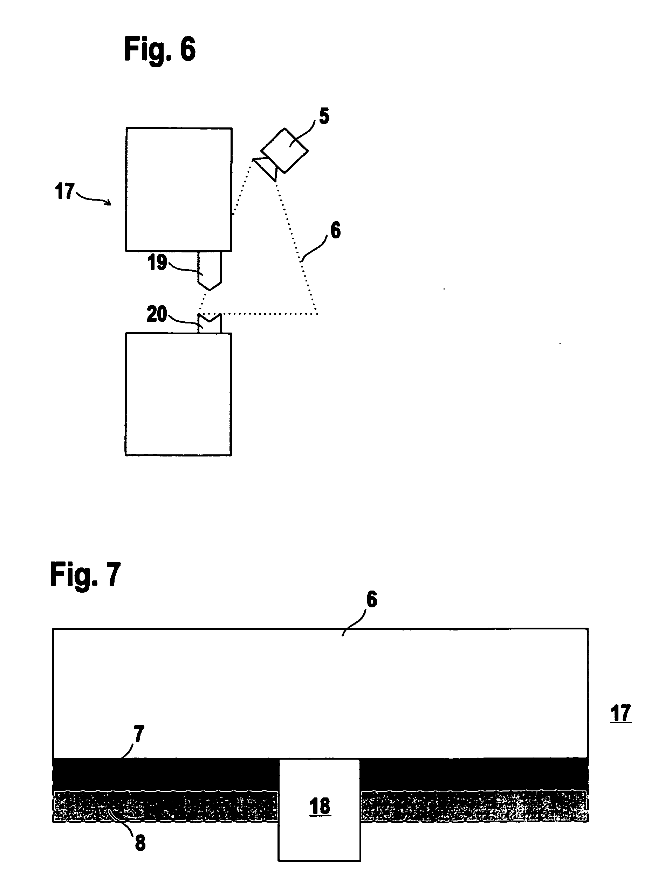

In den Figuren 6 und 7 ist ein Ausführungsbeispiel eines als Abkantpresse 17 ausgebildeten Arbeitsmittels dargestellt, welches zur Vermeidung von Gefährdungen einer Bedienperson überwacht werden muss.

Die Abkantpresse 17 dient zum Biegen und Formen von Werkstücken 18, insbesondere von Blechteilen. Die Formung eines Werkstücks 18 erfolgt jeweils mittels eines Oberwerkzeugs 19 und eines mit diesem zusammenwirkenden Unterwerkzeugs 20. Bei einer Pressbewegung werden das Ober- 19 und Unterwerkzeug 20 gegeneinander geführt, so dass ein dazwischenliegendes Werkstück 18 entlang einer Biegelinie abgekantet oder gebogen wird.

Zur Bearbeitung der Werkstücke 18 werden diese üblicherweise von Bedienpersonen in vorgegebenen Positionen zwischen Ober- 19 und Unterwerkzeug 20 eingebracht. Dadurch besteht für die jeweilige Bedienperson insbesondere die Gefahr von schwerwiegenden Verletzungen durch Einbringen der Hände oder Finger in den Bereich zwischen Ober- 19 und Unterwerkzeug 20. Des Weiteren birgt die Bewegung des Werkstücks 18 während des Pressvorgangs ein erhebliches Verletzungsrisiko der Bedienperson.

Zur Sicherung der Bedienperson ist wiederum die erfindungsgemäße Vorrichtung 5 vorgesehen, welche als berührungslose Schutzeinrichtung einen Erfassungsbereich 6 am Arbeitsmittel erfasst.

Wie aus den Figuren 6 und 7 ersichtlich ist, bildet der von der Vorrichtung 5 überwachte Erfassungsbereich 6 einen dreidimensionalen Raumbereich, dessen Grundfläche einen rechteckigen Querschnitt aufweist. Die Längsseite des Erfassungsbereiches 6 verläuft dabei entlang der Biegelinien der im Erfassungsbereich 6 liegenden Ober- 19 und Unterwerkzeuge 20.

Die Schutzzone 7 ist im vorliegenden Fall als Teilbereich des Erfassungsbereichs 6 ausgebildet, dessen längsseitige Grenze parallel zu den Biegelinien des Ober- 19 und Unterwerkzeuges 20 verläuft. Die Warnzone 8 liegt im Vorfeld des Ober- 19 und Unterwerkzeuges 20 und schließt unmittelbar an die Schutzzone 7 an.

### Bezugszeichenliste

- (1): Montageroboter
- (2): Fertigungszelle
- (3): Einzäunung
- (4): Zugangsöffnung
- (5): Vorrichtung
- (6): Erfassungsbereich
- (7): Schutzzone
- (8): Warnzone
- (9): Druckmaschine
- (10): Anleger
- (11): Papierstapel
- (12): Kettenförderer
- (13): Rollenbahn
- (14): Kettenförderer
- (15): Rahmen
- (16): Greifer
- (17): Abkantpresse
- (18): Werkstück
- (19): Oberwerkzeug
- (20): Unterwerkzeug
- (50): Beleuchtungssystem
- (51): Kamera
- (51'): Kamera
- (52): Strahlteiler
- (53): Rechnereinheit
- (53'): Rechnereinheit
- (54): Schnittstelle
- (54'): Schnittstelle
- (55): Ausgangsschaltung
- (56): Schaltausgang
- (57): Warnausgang
- (58): Meldeausgang

## Patentansprüche

1. Verfahren zur Überwachung eines Erfassungsbereichs an einem Arbeitsmittel mit wenigstens einer Kamera (51, 51'), wobei eine objektfreie Schutzzone (7) innerhalb des Erfassungsbereichs mittels der Kamera (51, 51') als Referenzhintergrund erfasst wird, **gekennzeichnet durch** folgende Verfahrensschritte:
Überprüfung des Referenzhintergrundes hinsichtlich dessen Inhomogenität, wobei der Referenzhintergrund nur dann als ungültig verworfen wird, wenn innerhalb einer vorgegebenen Varianzstrecke die ermittelte Inhomogenität ein vorgegebenes Maß unterschreitet und ansonsten der Referenzhintergrund als gültig klassifiziert wird,
Freigabe zur Erfassung von in die Schutzzone (7) eindringenden sicherheitskritischen Objekten bei als gültig klassifiziertem Referenzhintergrund, wobei diese **durch** Vergleich von mit der Kamera (51, 51') aktuell ermittelten Bildern der Schutzzone (7) mit dem gültigen Referenzhintergrund erfolgt und ein sicherheitskritisches Objekt dann als erkannt gilt, wenn das jeweilige aktuelle Bild signifikant vom Referenzhintergrund abweicht.

2. Verfahren nach Anspruch 1, **dadurch gekennzeichnet, dass** die Kamera (51, 51') eine matrixförmige Anordnung von Empfangselementen aufweist, welche in ein Raster von flächigen Zonen mit jeweils einer vorgegebenen Anzahl von Empfangselementen zusammengefasst werden, wobei aus den Ausgangssignalen der Empfangselemente jeweils einer Zone wenigstens ein Referenzbildmerkmal abgeleitet wird, welches zur Klassifizierung der Inhomogenität des Referenzhintergrundes dient.

3. Verfahren nach Anspruch 2, **dadurch gekennzeichnet, dass** die Ausgangsignale der Empfangselemente der Kamera (51, 51') von Grauwerten oder der Farbwerten gebildet sind, und dass innerhalb jeder Zone der Mittelwert der Grauwerte oder Farbwerte der einzelnen Empfangselemente als Referenzbildmerkmal zur Klassifizierung der Inhomogenität des Referenzhindergrundes gebildet wird.

4. Verfahren nach einem der Ansprüche 2 oder 3, **dadurch gekennzeichnet, dass** die Varianzstrecke durch den Abstand zweier benachbarter Zonen gebildet ist.

5. Verfahren nach Anspruch 4, **dadurch gekennzeichnet, dass** die Größe der Varianzstrecke der Hälfte der minimalen zur erfassenden Objektgröße entspricht.

6. Verfahren nach Anspruch 5, **dadurch gekennzeichnet, dass** der Referenzhintergrund als ungültig verworfen wird, wenn zwei benachbarte Zonen innerhalb vorgegebener Toleranzgrenzen denselben Merkmalswert aufweisen.

7. Vorrichtung zur Überwachung eines Erfassungsbereichs an einem Arbeitsmittel mit wenigstens einer Kamera (51, 51'), wenigstens einer an diese angeschlossenen Rechnereinheit (53, 53') und wenigstens einem Schaltausgang (56), mit in der Rechnereinheit (53, 53') integrierten Mitteln zur Abspeicherung und Klassifizierung eines Referenzhindergrundes, **dadurch gekennzeichnet, daß** diese Mittel so ausgelegt sind, dass sie in der Lage sind, den Referenzhintergrund hinsichtlich dessen Inhomogenität zu überprüfen, wobei der Referenzhintergrund nur dann als ungültig verworfen wird, wenn innerhalb einer vorgegebenen Varianzstrecke die ermittelte Inhomogenität ein vorgegebenes Maß unterschreitet und ansonsten der Referenzhintergrund als gültig klassifiziert wird, wobei der Referenzhindergrund von einem mittels der Kamera (51, 51') erfassten Bild einer objektfreien Schutzzone (7) innerhalb des Erfassungsbereichs gebildet ist, mit in der Rechnereinheit (53, 53') integrierten Mitteln zur Freigabe einer Objekterfassung in Anhängigkeit der Klassifizierung des Referenzhintergrundes, und mit in der Rechnereinheit integrierten Mitteln zum Vergleich von aktuell mittels der Kamera (51, 51') ermittelten Bildern der Schutzzone (7) und einem als gültig klassifizierten Referenzhintergrund, wobei eine Erfassung eines sicherheitskritischen Objekts innerhalb der Schutzzone (7) gegeben ist, falls das aktuelle Bild signifikant vom Referenzhintergrund abweicht und wobei das Arbeitsmittel über den von der Rechnereinheit (53, 53') angesteuerten Schaltausgang (56) nur dann in Betrieb gesetzt ist, falls sich kein sicherheitskritisches Objekt innerhalb der Schutzzone (7) befindet.

8. Vorrichtung nach Anspruch 7, **dadurch gekennzeichnet, dass** in der Rechnereinheit (53, 53') ein binäres Steuersignal generiert wird, dessen Schaltzustände angeben, ob ein als gültig oder als ungültig klassifizierter Referenzhintergrund vorliegt.

9. Vorrichtung nach Anspruch 8, **dadurch gekennzeichnet, dass** in Abhängigkeit der Schaltzustände des Steuersignals die Objekterfassung freigegeben oder gesperrt ist.

10. Vorrichtung nach einem der Ansprüche 8 oder 9, **dadurch gekennzeichnet, dass** die Schaltzustände des Steuersignals über einen an die Rechnereinheit (53, 53') angeschlossenen Meldeausgang (58) ausgebbar sind.

11. Vorrichtung nach einem der Ansprüche 7 - 10, **dadurch gekennzeichnet, dass** diese zwei ein redundantes Kamerasystem bildende Kameras (51, 51') aufweist, auf welche mittels eines Strahlteilers (52) Bilder des Erfassungsbereichs abbildbar sind.

12. Vorrichtung nach Anspruch 11, **dadurch gekennzeichnet, dass** diese zwei Rechnereinheiten (53, 53') aufweist, wobei jeweils eine Rechnereinheit (53, 53') an eine der Kameras (51, 51') zur Auswertung der dort erfassten Bildinformationen angeschlossen ist, und wobei beide Rechnereinheiten (53, 53') zur gegenseitigen Überprüfung miteinander gekoppelt sind.

13. Vorrichtung nach Anspruch 12, **dadurch gekennzeichnet, dass** der Schaltausgang (56) von beiden Rechnereinheiten (53, 53') angesteuert ist.

14. Vorrichtung nach einem der Ansprüche 12 oder 13, **dadurch gekennzeichnet, dass** der Meldeausgang (58) von beiden Rechnereinheiten (53, 53') angesteuert ist.

15. Vorrichtung nach einem der Ansprüche 11 - 14, **dadurch gekennzeichnet, dass** die Kameras (51, 51') des Kamerasystems identisch oder wenigstens funktionsgleich sind.

16. Vorrichtung nach einem der Ansprüche 12 - 15, **dadurch gekennzeichnet, dass** die Rechnereinheiten (53, 53') eine identische Hardwarestruktur aufweisen.

17. Vorrichtung nach einem der Ansprüche 12 - 15, **dadurch gekennzeichnet, dass** die Rechnereinheiten (53, 53') unterschiedliche Softwarestrukturen aufweisen.

18. Vorrichtung nach einem der Ansprüche 12 - 17, **dadurch gekennzeichnet, dass** in jeder Rechnereinheit (53, 53') der Referenzhintergrund abgespeichert ist und hinsichtlich seiner Inhomogenität überprüft wird.

19. Vorrichtung nach Anspruch 18, **dadurch gekennzeichnet, dass** über das Steuersignal nur dann die Objekterfassung freigegeben ist, wenn der Referenzhintergrund in beiden Rechnereinheiten (53, 53') als gültig klassifiziert ist.

20. Vorrichtung nach einem der Ansprüche 12 - 19, **dadurch gekennzeichnet, dass** in den Rechnereinheiten zur Objekterfassung jeweils ein Vergleich der aktuellen Bilder der zugeordneten Kameras (51, 51') mit dem abgespeicherten Referenzhindergrund erfolgt.

21. Vorrichtung nach Anspruch 20, **dadurch gekennzeichnet, dass** in den Rechnereinheiten (53, 53') zur Objekterfassung aus den von den zugeordneten Kameras (51, 51') eingelesenen Bildinformationen Bildmerkmale gewonnen werden.

22. Vorrichtung nach Anspruch 21, **dadurch gekennzeichnet, dass** über die Kopplung zwischen den Rechnereinheiten (53, 53') ein Vergleich von in den beiden Rechnereinheiten (53, 53') ermittelten Bildmerkmalen erfolgt.

23. Vorrichtung nach Anspruch 22, **dadurch gekennzeichnet, dass** über den Schaltausgang (56) das Arbeitsmittel außer Betrieb gesetzt ist, falls die in den einzelnen Rechnereinheiten (53, 53') ermittelten Bildmerkmale nicht übereinstimmen.

24. Vorrichtung nach einem der Ansprüche 22 oder 23, **dadurch gekennzeichnet, dass** über den Schaltausgang (56) das Arbeitsmittel außer Betrieb gesetzt ist, falls in beiden Rechnereinheiten (53, 53') übereinstimmend Bildmerkmale ermittelt werden, die einem in der Schutzzone (7) befindlichen sicherheitskritischen Objekt zugeordnet sind.

25. Vorrichtung nach einem der Ansprüche 7 - 24, **dadurch gekennzeichnet, dass** das Arbeitsmittel von einem Arbeitsroboter, insbesondere einem Montageroboter (1) gebildet ist.

26. Vorrichtung nach einem der Ansprüche 7 - 24, **dadurch gekennzeichnet, dass** das Arbeitsmittel von einer Druckmaschine (9) gebildet ist.

27. Vorrichtung nach einem der Ansprüche 7 - 24, **dadurch gekennzeichnet, dass** das Arbeitsmittel von einer Zuführeinrichtung gebildet ist.

28. Vorrichtung nach einem der Ansprüche 7 - 24, **dadurch gekennzeichnet, dass** das Arbeitsmittel von einer Presse gebildet ist.

29. Vorrichtung nach einem der Ansprüche 7 - 24, **dadurch gekennzeichnet, dass** das Arbeitsmittel von einer Abkantpresse (17) gebildet ist.

30. Vorrichtung nach einem der Ansprüche 7 - 24, **dadurch gekennzeichnet, dass** die sicherheitskritischen Objekte von Personen gebildet sind.

31. Vorrichtung nach einem der Ansprüche 7 - 24, **dadurch gekennzeichnet, dass** die sicherheitskritischen Objekte von Armen von Personen gebildet sind.

32. Anordnung mit einer Vorrichtung nach einem der Ansprüche 7 - 31, **dadurch gekennzeichnet, dass** innerhalb des von dem Kamerasystem erfassten Erfassungsbereiches (6) neben der Schutzzone (7) wenigstens eine Warnzone (8) definiert ist, wobei bei einem in der Warnzone (8) befindlichen sicherheitskritischen Objekt über einen Warnausgang (57) ein Warnmelder aktiviert wird.

33. Anordnung nach Anspruch 32, **dadurch gekennzeichnet, dass** die Warnzone (8) an die Schutzzone (7) angrenzt.

34. Anordnung nach einem der Ansprüche 32 oder 33, **dadurch gekennzeichnet, dass** der Referenzhintergrund die Schutzzone (7) und die Warnzone (8) umfasst.

35. Anordnung nach einem der Ansprüche 33 oder 34, **dadurch gekennzeichnet, dass** für ein sicherheitskritisches Objekt innerhalb der Warnzone (8) dessen Bewegungsrichtung erfassbar ist.

36. Anordnung nach Anspruch 35, **dadurch gekennzeichnet, dass** eine Aktivierung des Warnmelders nur dann erfolgt, wenn sich ein sicherheitskritisches Objekt innerhalb der Warnzone (8) auf die Schutzzone (7) zu bewegt.

37. Anordnung nach einem der Ansprüche 32 - 36, **dadurch gekennzeichnet, dass** jeweils mehrere Schutzzonen (7) und Warnzonen (8) vorgesehen sind, wobei jeweils einer Schutzzone (7) ein Schaltausgang (56) und jeder Warnzone (8) ein Warnausgang (57) zugeordnet ist.

38. Anordnung nach Anspruch 37, **dadurch gekennzeichnet, dass** das Arbeitsmittel außer Betrieb gesetzt ist, falls sich in wenigstens einer Schutzzone (7) ein sicherheitskritisches Objekt befindet.

## Claims

1. Method for monitoring a detection area at a working means by at least one camera (51, 51'), wherein an object-free protection zone (7) within the detection area is detected by means of the camera (51, 51') as reference background, **characterised by** the following method steps:
checking the reference background with respect to inhomogeneity thereof, wherein the reference background is discarded as invalid only if within a predetermined variance path the ascertained inhomogeneity falls below a predetermined amount and otherwise the reference background is classified as valid,
freeing for detection of safety-critical objects, which penetrate into the protection zone (7), with the reference background classified as valid, wherein this takes place through comparison of images, which are currently ascertained by the camera (51, 51'), of the protection zone (7) with the valid reference background and a safety-critical object applies as recognised when the respective current image significantly differs from the reference background.

2. Method according to claim 1, **characterised in that** the camera (51, 51') comprises a matrix-shaped arrangement of receiving elements which are combined in a grid of areal zones with a respective predetermined number of receiving elements, wherein at least one reference image feature serving for classification of the inhomogeneity of the reference background is derived from the output signals of the receiving elements of a respective zone.

3. Method according to claim 2, **characterised in that** the output signals of the receiving elements of the camera (51, 51') are formed by grey values or the colour values and that within each zone the mean value of the grey values or colour values of the individual receiving elements is formed as a reference image feature for classification of the inhomogeneity of the reference background.

4. Method according one of claims 2 and 3, **characterised in that** the variance path is formed by the spacing of two adjacent zones.

5. Method according to claim 4, **characterised in that** the size of the variance path corresponds with half the minimum object size to be detected.

6. Method according to claim 5, **characterised in that** the reference background is discarded as invalid when two adjacent zones have the same reference feature within predetermined tolerance limits.

7. Device for monitoring a detection area at a working means with at least one camera (51, 51'), at least one computer unit (53, 53') connected therewith and at least one switching output (56), and with means, which are integrated in the computer unit (53, 53'), for storage and classification of a reference background, **characterised in that** these means are so designed that they are in a position of checking the reference background with respect to the inhomogeneity thereof, wherein the reference background is discarded as invalid only if, within a predetermined variance path the ascertained inhomogeneity falls below a predetermined amount and otherwise the reference background is classified as valid, wherein the reference background is formed by an image, which is detected by means of the camera (51, 51'), of an object-free protection zone (7) within the detection area, with means, which are integrated in the computer unit (53, 53'), for freeing an object detection in dependence on the classification of the reference background, and with means, which are integrated in the computer unit, for comparison of current images, which are ascertained by means of the camera (51, 51'), of the protection zone (7) and a reference background classified as valid, wherein a detection of a safety-critical object within the protection zone (7) is given if the current image significantly differs from the reference background and wherein the working means is placed in operation by way of the switching output (56), which is controlled by the computer unit (53, 53'), only if a safety-critical object is located within the protection zone (7).

8. Device according to claim 7, **characterised in that** a binary control signal, the switching states of which indicate whether a reference background classified as valid or as invalid is present, is generated in the computer unit (53, 53').

9. Device according to claim 8, **characterised in that** the object detection is freed or blocked in dependence on the switching states of the control signal.

10. Device according to one of claims 8 and 9, **characterised in that** the switching states of the control signal can be issued by way of a reporting output (58) connected with the computer unit (53, 53').

11. Device according to any one of claims 7 to 10, **characterised in that** this comprises two cameras (51, 51') which form a redundant camera system and on which images of the detection area can be imaged by means of a beam divider (52).

12. Device according to claim 11, **characterised in that** this comprises two computer units (53, 53'), wherein each computer unit (53, 53') is connected with a respective one of the cameras (51, 51') for evaluation of the image data detected there and wherein the two computer units (53, 53') are coupled together for mutual checking.

13. Device according to claim 12, **characterised in that** the switching output (56) is controlled by both computer units (53, 53').

14. Device according to one of claims 12 and 13, **characterised in that** the reporting output (58) of the two computer units (53, 53') is controlled in drive.

15. Device according to any one of claims 11 to 14, **characterised in that** the cameras (51, 51') of the camera system are identical or at least the same in function.

16. Device according to any one of claims 12 to 15, **characterised in that** the computer units (53, 53') have an identical hardware structure.

17. Device according to any one of claims 12 to 15, **characterised in that** the computer units (53, 53') have different software structures.

18. Device according to any one of claims 12 to 17, **characterised in that** the reference background is stored in each computer unit (53, 53') and checked with respect to the inhomogeneity thereof.

19. Device according to claim 18, **characterised in that** the object detection is freed by way of the control signal only if the reference background is classified as valid in both computer units (53, 53').

20. Device according to any one of claim 12 to 19, **characterised in that** a respective comparison of the current images of the associated cameras (51, 51') with the stored reference background is carried out in the computer units for object detection.

21. Device according to claim 20, **characterised in that** image features are obtained from the image data, which are read in from the associated cameras (51, 51'), in the computer units (53, 53') for object detection.

22. Device according to claim 21, **characterised in that** a comparison of image features ascertained in the two computer units (53, 53') is carried out by way of the coupling between the computer units (53, 53').

23. Device according to claim 22, **characterised in that** the working means is taken out of operation by way of the switching output (56) if the image features ascertained in the individual computer units (53, 53') do not correspond.

24. Device according to one of claims 22 and 23, **characterised in that** the working means is taken out of operation by way of the switching output (56) if corresponding image features associated with a safety-critical object located in the protection zone (7) are ascertained in both computer units (53, 53').

25. Device according to any one of claims 7 to 24, **characterised in that** the working means is formed by a working robot, particularly an assembly robot (1).

26. Device according to any one of claims 7 to 24, **characterised in that** the working means is formed by a printing machine (9).

27. Device according to any one of claims 7 to 24, **characterised in that** the working means is formed by a feed device.

28. Device according to any one of claims 7 to 24, **characterised in that** the working means is formed by a press.

29. Device according to any one of claims 7 to 24, **characterised in that** the working means is formed by a flanging press (17).

30. Device according to any one of claims 7 to 24, **characterised in that** the safety-critical objects are formed by persons.

31. Device according to any one of claims 7 to 24, **characterised in that** the safety-critical objects are formed by arms of persons.

32. Arrangement with a device according to any one of claims 7 to 31, **characterised in that** at least one warning zone (8) is defined within the detection area (6), which is detected by the camera system, near the protection zone (7), wherein a warning report is activated by way of a warning output (57) in the case of a safety-critical object located in the warning zone (8).

33. Arrangement according to claim 32, **characterised in that** the warning zone (8) adjoins the protection zone (7).

34. Arrangement according to one of claims 32 and 33, **characterised in that** the reference background embraces the protection zone (7) and the warning zone (8).

35. Arrangement according to one of claims 33 and 34, **characterised in that** for a safety-critical object within the warning zone (8) the direction of movement thereof is detectable.

36. Arrangement according to claim 35, **characterised in that** activation of the warning report takes place only when a safety-critical object moves within the warning zone (8) towards the protection zone (7).

37. Arrangement according to any one of claims 32 to 36, **characterised in that** several protection zones (7) and warning zones (8) are provided, wherein a switching output (56) is associated with each protection zone (7) and a warning output (57) is associated with each warning zone (8).

38. Arrangement according to claims 37, **characterised in that** the working means is taken out of operation if a safety-critical object is located in at least one protection zone.

## Revendications

1. Procédé pour surveiller une zone de détection sur un équipement ou outil de travail avec au moins une caméra (51, 51'), dans lequel une zone de protection (7) libre d'objets à l'intérieur de la zone de détection est détectée au moyen de la caméra (51, 51') en tant qu'arrière-plan de référence, **caractérisé par** les étapes de procédé suivantes :
vérification de l'arrière-plan de référence en ce qui concerne son inhomogénéité, l'arrière-plan de référence étant rejeté comme non valide seulement si l'inhomogénéité déterminée est inférieure à une mesure prédéfinie à l'intérieur d'une section de variance prédéfinie et sinon l'arrière-plan de référence étant classifié comme valide,
autorisation de détection d'objets critiques pour la sécurité pénétrant dans la zone protégée (7) en cas d'arrière-plan de référence classifié comme valide, celle-ci étant réalisée par comparaison d'images de la zone protégée (7) actuellement déterminées par la caméra (51, 51') avec l'arrière-plan de référence valide, et un objet critique pour la sécurité étant reconnu quand l'image actuelle respective diffère significativement de l'arrière-plan de référence.

2. Procédé selon la revendication 1, **caractérisé en ce que** la caméra (51, 51') présente une disposition matricielle d'éléments de réception qui sont regroupés en une trame de zones planes ou surfaciques comportant chaque fois un nombre prédéfini d'éléments de réception, au moins une caractéristique d'image de référence qui sert à la classification de l'inhomogénéité de l'arrière-plan de référence étant dérivée des signaux de sortie des éléments de réception de chaque fois une zone.

3. Procédé selon la revendication 2, **caractérisé en ce que** les signaux de sortie des éléments de réception de la caméra (51, 51') sont formés de valeurs de gris ou de valeurs de couleur, et qu'à l'intérieur de chaque zone la valeur moyenne des valeurs de gris ou valeurs de couleur des différents éléments de réception est formée en tant que caractéristique d'image de référence pour classifier l'inhomogénéité de l'arrière-plan de référence.

4. Procédé selon l'une des revendications 2 ou 3, **caractérisé en ce que** la section de variance est formée par la distance entre deux zones voisines.

5. Procédé selon la revendication 4, **caractérisé en ce que** la grandeur de la zone de variance correspond à la moitié de la taille minimale des objets à détecter.

6. Procédé selon la revendication 5, **caractérisé en ce que** l'arrière-plan de référence est rejeté comme non valide si deux zones voisines présentent la même valeur de caractéristique à l'intérieur de limites de tolérance prédéfinies.

7. Dispositif pour surveiller une zone de détection sur un équipement ou outil de travail avec au moins une caméra (51, 51'), au moins une unité de calcul (53, 53') connectée à celle-ci et au moins une sortie de commutation (56), avec des moyens intégrés dans l'unité de calcul (53, 53') pour mémoriser et classifier un arrière-plan de référence, **caractérisé en ce que** ces moyens sont prévus de manière à être en mesure de vérifier l'arrière-plan de référence en ce qui concerne son inhomogénéité, l'arrière-plan de référence étant rejeté comme non valide seulement si l'inhomogénéité déterminée est inférieure à une mesure prédéfinie à l'intérieur d'une section de variance prédéfinie et sinon l'arrière-plan de référence étant classifié comme valide, l'arrière-plan de référence étant formé par une image d'une zone protégée (7) libre d'objets détectée au moyen de la caméra (51, 51') à l'intérieur de la zone de détection, avec des moyens intégrés dans l'unité de calcul (53, 53') pour autoriser une détection d'objets en fonction de la classification de l'arrière-plan de référence, et avec des moyens intégrés dans l'unité de calcul pour comparer des images de la zone protégée (7) actuellement déterminées par la caméra (51, 51') et un arrière-plan de référence classifié comme valide, une détection d'un objet critique pour la sécurité à l'intérieur de la zone protégée (7) ayant lieu si l'image actuelle diffère significativement de l'arrière-plan de référence et l'équipement de travail n'étant mis en service par l'intermédiaire de la sortie de commutation (56) commandée par l'unité de calcul (53, 53') que si aucun objet critique pour la sécurité ne se trouve à l'intérieur de la zone protégée (7).

8. Dispositif selon la revendication 7, **caractérisé en ce qu'**un signal de commande binaire dont les états de commutation indiquent la présence d'un arrière-plan de référence classifié comme valide ou non valide est généré dans l'unité de calcul (53, 53').

9. Dispositif selon la revendication 8, **caractérisé en ce que** la détection d'objet est autorisée ou bloquée en fonction des états de commutation du signal de commande.

10. Dispositif selon l'une des revendications 8 ou 9, **caractérisé en ce que** les états de commutation du signal de commande peuvent être délivrés via une sortie de signalisation (58) connectée à l'unité de calcul (53, 53').

11. Dispositif selon l'une des revendications 7 à 10, **caractérisé en ce que** celui-ci présente deux caméras (51, 51') formant un système de caméras redondant, sur lesquelles des images de la zone de détection peuvent être reproduites au moyen d'un diviseur de faisceau (52).

12. Dispositif selon la revendication 11, **caractérisé en ce que** celui-ci présente deux unités de calcul (53, 53'), une unité de calcul (53, 53') étant chaque fois connectée à une des caméras (51, 51') pour évaluer les informations d'image détectées par celle-ci, et les deux unités de calcul (53, 53') étant couplées l'une avec l'autre dans un but de vérification mutuelle.

13. Dispositif selon la revendication 12, **caractérisé en ce que** la sortie de commutation (56) est commandée par les deux unités de calcul (53, 53').

14. Dispositif selon l'une des revendications 12 ou 13, **caractérisé en ce que** la sortie de signalisation (58) est commandée par les deux unités de calcul (53, 53').

15. Dispositif selon l'une des revendications 11 à 14, **caractérisé en ce que** les caméras (51, 51') du système de caméras sont identiques ou au moins de fonctionnement identique.

16. Dispositif selon l'une des revendications 12 à 15, **caractérisé en ce que** les unités de calcul (53, 53') présentent une structure matérielle identique.

17. Dispositif selon l'une des revendications 12 à 15, **caractérisé en ce que** les unités de calcul (53, 53') présentent des structures logicielles différentes.

18. Dispositif selon l'une des revendications 12 à 17, **caractérisé en ce que** l'arrière-plan de référence est mémorisé et vérifié en ce qui concerne son inhomogénéité dans chaque unité de calcul (53, 53').

19. Dispositif selon la revendication 18, **caractérisé en ce que** la détection d'objets n'est autorisée par l'intermédiaire du signal de commande que si l'arrière-plan de référence est classifié comme valide dans les deux unités de calcul (53, 53').

20. Dispositif selon l'une des revendications 12 à 19, **caractérisé en ce que** dans les unités de calcul, pour la détection d'objets, une comparaison des images actuelles des caméras (51, 51') associées avec l'arrière-plan de référence mémorisé a lieu.

21. Dispositif selon la revendication 20, **caractérisé en ce que** dans les unités de calcul (53, 53'), pour la détection d'objets, des caractéristiques d'image sont extraites des informations d'image lues par les caméras (51, 51') associées.

22. Dispositif selon la revendication 21, **caractérisé en ce que** par le biais du couplage entre les unités de calcul (53, 53'), une comparaison de caractéristiques d'image déterminées par les deux unités de calcul (53, 53') a lieu.

23. Dispositif selon la revendication 22, **caractérisé en ce que** l'équipement ou outil de travail est mis hors service par l'intermédiaire de la sortie de commutation (56) si les caractéristiques d'image déterminées dans les différentes unités de calcul (53, 53') ne concordent pas.

24. Dispositif selon l'une des revendications 22 ou 23, **caractérisé en ce que** l'équipement ou outil de travail est mis hors service par l'intermédiaire de la sortie de commutation (56) si dans les deux unités de calcul (53, 53') sont déterminées de manière concordante des caractéristiques d'image qui sont associées à un objet critique pour la sécurité se trouvant dans la zone protégée (7).

25. Dispositif selon l'une des revendications 7 à 24, **caractérisé en ce que** l'équipement ou outil de travail est formé par un robot de travail, en particulier un robot de montage (1).

26. Dispositif selon l'une des revendications 7 à 24, **caractérisé en ce que** l'équipement ou outil de travail est formé par une machine à imprimer (9).

27. Dispositif selon l'une des revendications 7 à 24, **caractérisé en ce que** l'équipement ou outil de travail est formé par un équipement d'amenée ou d'alimentation.

28. Dispositif selon l'une des revendications 7 à 24, **caractérisé en ce que** l'équipement ou outil de travail est formé par une presse.

29. Dispositif selon l'une des revendications 7 à 24, **caractérisé en ce que** l'équipement ou outil de travail est formé par une presse plieuse (17).

30. Dispositif selon l'une des revendications 7 à 24, **caractérisé en ce que** les objets critiques pour la sécurité sont formés par des personnes.

31. Dispositif selon l'une des revendications 7 à 24, **caractérisé en ce que** les objets critiques pour la sécurité sont formés par des bras de personnes.

32. Agencement avec un dispositif selon l'une des revendications 7 à 31, **caractérisé en ce qu'**au moins une zone d'avertissement (8) est définie en plus de la zone protégée (7) à l'intérieur de la zone de détection (6) détectée par le système de caméras, un indicateur d'avertissement étant activé par l'intermédiaire d'une sortie d'avertissement (57) si un objet critique pour la sécurité se trouve dans la zone d'avertissement (8).

33. Agencement selon la revendication 32, **caractérisé en ce que** la zone d'avertissement (8) est adjacente à la zone protégée (7).

34. Agencement selon l'une des revendications 32 ou 33, **caractérisé en ce que** l'arrière-plan de référence comprend la zone protégée (7) et la zone d'avertissement (8).

35. Agencement selon l'une des revendications 33 ou 34, **caractérisé en ce que** le sens de déplacement d'un objet critique pour la sécurité à l'intérieur de la zone d'avertissement (8) est détectable.

36. Agencement selon la revendication 35, **caractérisé en ce que** l'indicateur d'avertissement n'est activé qui si un objet critique pour la sécurité se trouvant à l'intérieur de la zone d'avertissement (8) se déplace vers la zone protégée (7).

37. Agencement selon l'une des revendications 32 à 36, **caractérisé en ce qu'**il est prévu chaque fois plusieurs zones de protection (7) et zones d'avertissement (8), une sortie de commutation (56) étant associée à chaque zone protégée (7) et une sortie d'avertissement (57) à chaque zone d'avertissement (8).

38. Agencement selon la revendication 37, **caractérisé en ce que** l'équipement de travail est mis hors service si un objet critique pour la sécurité se trouve dans au moins une zone protégée (7).
